(19) Europäisches Patentamt
European Patent Office
Office européen des brevets

(11) Veröffentlichungsnummer: **0 260 448**
**A2**

(12) # EUROPÄISCHE PATENTANMELDUNG

(21) Anmeldenummer: **87111851.9**

(22) Anmeldetag: **15.08.87**

(51) Int. Cl.$^4$: **C09D 3/81** , C09D 5/44

(30) Priorität: **19.08.86 DE 3628122**

(43) Veröffentlichungstag der Anmeldung: **23.03.88 Patentblatt 88/12**

(84) Benannte Vertragsstaaten: **AT BE CH DE ES FR GB IT LI NL SE**

(71) Anmelder: **Herberts Gesellschaft mit beschränkter Haftung**
**Christbusch 25**
**D-5600 Wuppertal 2(DE)**

(72) Erfinder: **Bederke, Klaus, Dr. Chem.**
**Oststrasse 36**
**D-4333 Sprockhövel 2(DE)**
Erfinder: **Hendrikx, Georg Hans Ludwig, Dr. Chem.**
**Nordrather-Strasse 76**
**D-5620 Velbert 15(DE)**
Erfinder: **Kerber, Hermann, Chem. Ing. grad.**
**Daniel Schürmann-Weg 37**
**D-5600 Wuppertal 21(DE)**
Erfinder: **Patzschke, Hans-Peter, Dr. Chem.**
**Am Heckendorn 71**
**D-5600 Wuppertal 2(DE)**
Erfinder: **Rupieper, Paul Dipl.-Phys.**
**Deilbacher-Strasse 52**
**D-5620 Velbert(DE)**

(74) Vertreter: **Türk, Gille, Hrabal**
**Bruckner Strasse 20**
**D-4000 Düsseldorf 13(DE)**

(54) **Fremdvernetzende Bindemittelkombination, diese enthaltende wässriges Überzugsmittel und dessen Verwendung.**

(57) Beschrieben wird eine fremdvernetzende Bindemittelkombination für wasserverdünnbare Lacke, die 94 bis 40 Gew.-% eines wasserverdünnbaren Hydroxylgruppen enthaltenden Poly(meth)acrylatharzes, 1 bis 10 Gew.-% eines speziellen Mischpolymeren, welches das Anreiben erleichtern soll, und 5 bis 50 Gew.-% Vernetzungsmittel enthält. Beschrieben wird auch ein wäßriges Überzugsmittel, das die fremdvernetzende Bindemittelkombination enthält, sowie die Verwendung zum Beschichten von elektrisch leitenden Gegenständen.

EP 0 260 448 A2

# Fremdvernetzende Bindemittelkombination, diese enthaltende wäßriges Überzugsmittel und dessen Verwendung

Die Erfindung betrifft eine fremdvernetzende Bindemittelkombination für wasserverdünnbare Lacke, die vorzugsweise elektrophoretisch abscheidbar sind, sowie an Anode oder Kathode abscheidbare wäßrige Elektrotauchlacküberzugsmittel (ATL oder KTL-Bäder) und deren Verwendung zum Beschichten von Gegenständen.

Elektrotauchlacküberzugsmittel werden großtechnisch als Grundierungen eingesetzt. Sie werden auch als Elektrophoreselacke oder EC-Lacke bezeichnet. Heute werden vielfach Maleinatöle, carboxylgruppenhaltige Butadienöle oder aminogruppenhaltige Epoxidharze als EC-Lacke eingesetzt.Die thermische Vernetzung dieser Bindemittel erfolgt nach unterschiedlichen Verfahren, z.B. durch Reaktionen von ungesättigten Doppelbindungen oder funktionellen Gruppen des Basisharzes mit Formaldehyd-Kondensationsharzen, blockierten Polyisocyanaten oder umesterungsfähigen Vernetzungsmitteln. Je nach Anforderungen der Kunden werden dabei nicht alle Wünsche an die Eigenschaften des Lackes erfüllt.

Bei der Herstellung von farbtonbeständigen Lackierungen, wie sie beispielsweise für die Hausgeräte-Industrie gebraucht werden, haben diese Systeme die unangenehme Eigenschaft stark zu vergilben. Manchmal werden bei Zweischichtlackierungen sogar wolkenartige Farbtonveränderungen im Decklack erzeugt, die das optimale Erscheinungsbild der Deckschicht stören. Andere weniger vergilbende Bindemittelsysteme des Stands der Technik auf Basis Poly(meth)-acrylatharze zeigen bisher nicht das hohe Korrosionsschutzniveau, wie es in der Autoindustrie mit Amino-Epoxidharzen erreicht wird. In der DE-A-34 36 346 werden wäßrige nichtvergilbende Elektrotauchlacküberzugsmittel beschrieben, die als Basisharz primäre und/oder sekundäre Hydroxylgruppen und primäre, sekundäre und/oder tertiäre Aminogruppen enthaltende Kunstharz-Bindemittel wie Amino-Poly(meth)acrylatharze mit einer Hydroxylzahl von 80 bis 250 (mg KOH pro g Festharz), einer Aminzahl von 30 bis 150 ( mg KOH pro g Festharz) und einer mittleren Molmasse ($\overline{M}$ n) von 250 bis 10 000 enthalten.

In der DE-OS 23 57 152 werden wäßrige nichtvergilbende Elektrotauchlacküberzugsmittel beschrieben, die als Basisharz primäre und/oder sekundäre Hydroxylgruppen und Carboxylgruppen enthaltende Poly(meth)acrylatharze mit

20 bis 60 Gew.-% harten Monomeren

20 bis 40 Gew.-% weichen Monomeren

4 bis 20 Gew.-% hydroxylgruppenhaltigen Monomeren

4 bis 20 Gew.-% $\alpha,\beta$-ungesättigten Carbonsäuren

enthalten. Beide Harzsysteme haben den Nachteil eines zu geringen Pigmentaufnahmevermögens und eines ungenügenden Korrosionsschutzes, besonders an den Kanten und Ecken der beschichteten Gegenstände.

Aufgabe der Erfindung ist die Bereitstellung von fremdvernetzenden Bindemittelkombinationen für wasserverdünnbare nichtvergilbende Lacke bzw. von insbesondere elektrophoretisch abscheidbaren wäßrigen Elektrotauchlacküberzugsmitteln, die ein hohes Pigmentaufnahmevermögen haben und die zu Überzügen mit verbessertem Glanzgrad und verbesserter Kantenabdeckung bei elektrophoretischer Abscheidung an der Anode oder Kathode, anschließender Spülung mit Wasser und Einbrennen führen.

Es hat sich überraschenderweise gezeigt, daß diese Aufgabenstellung dadurch gelöst werden kann, daß eine Bindemittelkombination aus einem mit Wasser verdünnbaren ionischen Poly(meth)-acrylatharz ( Komponente A) )mit einem speziellen Mischpolymerisat (Komponente B) ) aus einem Aminogruppen enthaltenden Copolymerisat und einem Polyisocyanat bereitgestellt wird.

Gegenstand der Erfindung ist daher die in den Patentansprüchen beschriebene fremdvernetzende Bindemittelkombination für wasserverdünnbare Lacke, die unter dern Verwendung bereiteten, elektrophoretisch abscheidbaren wäßrigen Überzugsmittel und deren Verwendung zum Beschichten von Gegenständen.

Die erfindungsgemäße fremdvernetzende Bindemittelkombination enthält die Komponente A), B) und C) in den anspruchsgemäß angegebenen Mengen. Bevorzugte Mengenanteile für die Komponente A) liegen bei 84 bis 57 Gew.% . Bevorzugte Mengenanteile für die Komponente C) liegen bei 15 bis 35 Gew.-%.

Bei der erfindungsgemäß eingesetzten Komponente A) handelt es sich um ein Hydroxylgruppen enthaltendes Poly(meth)acrylatharz, das basische oder saure Gruppen aufweist, die durch mindestens teilweise Neutralisation ionische Salze bilden. Es können sowohl Anionen oder auch Kationen bildende Gruppen sein.

Das ionische Gruppen enthaltende Polymerisatharz der Komponente A) wird durch Lösungspolymerisation hergestellt und hat eine Hydroxylzahl von bevorzugt 30 bis 450, insbesondere 50 bis 200(mg KOH pro g Festharz). Die zahlenmittlere Molmasse ($\overline{M}$ n) liegt bevorzugt bei 500 bis 50 000 und insbesondere bei 1000 bis 10 000

(gemessen durch Gelpermeationschromatographie, geeicht mit Polystyrolfraktionen). Seine Viskosität beträgt bevorzugt 0,1 bis 10 Pa•s, insbesondere 0,5 bis 5 Pa•s in 50%iger Lösung in Monoglykolethern (insbesondere Butoxyethanol) bei 25°C.Seine Glasübergangstemperatur (errechnet aus den Glasübergangstemperaturen der Homopolymerisate) liegt insbesondere bei -50 bis +150°C, bevorzugt bei -20 bis +50°C. Die geeigneten mittleren Molmassen bzw. Viskositäten können auch dadurch erhalten werden, daß Harze mit höherer und niedriger Molmasse bzw. Viskosität vermischt werden.

Die ionische Gruppen enthaltenden Polyacrylatharze können nach dem Stand der Technik, wie er beispielsweise in der DE-A-15 46 854, der DE-A-23 25 177 oder der DE-A-23 57 152 beschrieben wird, hergestellt werden. Einsetzbare ethylenisch ungesättigte Monomere sind praktisch radikalisch polymerisierbare Monomeren, wobei jedoch die üblichen Einschränkungen für Copolymerisationen gelten, die durch Das Q-und e-Schema nach Alfrey und Price, bzw. durch die Copolymerisationsparameter vorgegeben sind ( vgl. Brandrup und Immergut, Polymer Handbuch, 2nd edition, John Wiley and Sons, New York 1975). Handelt es sich bei den ionischen Gruppen enthaltenden Polymerisatharzen der Komponente A) um ein basisches Poly(meth)-acrylatharz, so enthält es Aminogruppen und/oder Oniumgruppen, wie Ammonium-,Sulfonium-oder Phosphoniumgruppen. Besonders bevorzugt werden Aminogruppen, die das Harz nach Neutralisation mit organischen Säuren mit Wasser verdünnbar machen. Ein derartiges Aminogruppen und Hydroxylgruppen enthaltendes Mischpolymeres wird bevorzugt durch Polymerisation in Lösung erhalten. Es weist insbesondere eine Aminzahl von 30 bis 150, bevorzugt von 45 bis 100 mg KOH pro g Festharz auf.

Die Komponente A) kann hergestellt werden aus radikalisch polymerisierbaren aminogruppenhaltigen Monomeren und radikalisch polymerisierbaren hydroxylgruppenhaltigen Monomeren mit radikalisch polymerisierbaren Monomeren, die keine weiteren reaktiven Gruppen enthalten, oder aus radikalisch polymerisierbaren Monomeren, die sowohl Aminogruppen als auch Hydroxylgruppen enthalten, zusammen mit den radikalisch polymerisierbaren Monomeren, die keine weiteren reaktiven Gruppen enthalten.

Dabei wird bevorzugt so gearbeitet, daß 6 bis 40 Gewichtsteile der radikalisch polymerisierbaren aminogruppenhaltigen Monomeren (Komponente a) ) und 4 bis 50 Gewichsteile der radikalisch polymerisierbaren hydroxylgruppenhaltigen Monomeren (Komponente b) ) oder 8 bis 60 Gewichtsteile der radikalisch polymerisierbaren hydroxy- und aminogruppenhaltigen Monomeren (Komponente ab) ) pro 10 bis 90 Gewichtsteile der radikalisch polymerisierbaren Monomeren, die keine weiteren reaktiven Gruppen enthalten (Komponente c) ) eingesetzt werden.

Gemäß einer bevorzugten Ausführungsform können von den 10 bis 90 Gewichtsteilen der radikalisch polymerisierbaren Monomeren, die keine weiteren reaktiven Gruppen enthalten (Komponente c) ) 0,1 bis 7 Gewichtsteile ersetzt sein durch ethylenisch polyungesättigte Monomere.

Als aminogruppenhaltige Monomere werden Monomere der allgemeinen Formel

$R\text{-}CH=CR'\text{-}X\text{-}A\text{-}N(R'')_2$

eingesetzt, wobei

$R = R'$ oder $-X-C_nH_{2n+1}$

$R' = -H$ oder $-C_nH_{2n+1}$

$R'' = -R'$, $-C_nH_{2n}OH$ und/oder $-C_nH_{2n}NR_2$

$X = -COO-$, $-CONH-$, $-CH_2O-$ oder $-O-$,

$A = -C_nH_{2n}-$ oder $-C_nH_{2n}-\underset{OH}{CH}-CH_2-$ und

$n = 1$ bis 8, bevorzugt 1 bis 3 bedeuten.

Beispiele für ungesättigte N-gruppenhaltige Monomere sind N-Dialkyl-oder N-Monoalkylaminoalkyl(meth)acrylate oder die entsprechenden N-Alkanol-Verbindungen wie beispielsweise N-Diethyl-aminoethylmethacrylat oder N-tert-Butylaminoethylacrylat, N-Dialkyl-oder N-Monoalkylaminoalkyl(meth)acrylamid oder die entsprechenden N-Alkanol-Verbindungen wie beispielsweise N-Dimethyl-aminoethanolacrylamid und/oder Vinylgruppen enthaltende heterocyclische Verbindungen mit einem oder mehreren basischen Stickstoffatomen wie beispielsweise N-Vinylimidazol.

Unter radikalisch polymerisierbaren hydroxylgruppenhaltigen Monomeren werden solche verstanden, die neben einer polymerisierbaren ethylenisch ungesättigten Gruppe noch mindestens eine Hydroxylgruppe an einem C2 bis C20 linearen, verzweigten oder cyclischen Kohlenstoffgerüst enthalten. Es sind hauptsächlich ungesättigte Veresterungsprodukte der allgemeinen Formel

$R\text{-}CH=CR'\text{-}X\text{-}B$

worin R,R' und X wie vorstehend definiert sind, und B eine lineare oder verzweigte $C_{1-6}$Alkylgruppe mit 1-3 OH-Gruppen ist.

Besonders geeignet sind (Meth)acrylsäure-hydroxyalkylester wie beispielsweise 2-Hydroxyethylacrylat, 2-Hydroxypropylmethacrylat, Butandiol-1.4-monoacrylat, 2.3-Dihydroxypropylmethacrylat, Pentaerythrit-monomethacrylat, Polypropylenglykolmonoacrylat oder auch Fumarsäuredihydroxyalkylester. Es können jedoch auch N-Hydroxyalkyl(meth)acrylamide oder N-Hydroxyalkylfumarsäure-mono-oder diamide wie beispielsweise N-Hydroxyethyl-acrylamid oder N-(2-Hydroxypropyl)-methacrylamid eingesetzt werden. Besonders elastische Eigenschaften sind beim Einsatz eines Reaktionsproduktes von Hydroxyalkyl-

(meth)acrylat mit ε-Caprolacton zu erhalten. Andere hydroxylgruppenhaltige Verbindungen sind Allylalkohol, Monovinylether von Polyalkoholen, besonders Diolen wie der Monovinylether des Ethylenglykols oder Butandiols, sowie hydroxylgruppenhaltige Allylether oder -ester wie 2.3-Dihydroxypropylmonoallylether, Trimethylolpropan-monoallylether oder 2.3-Dihydroxypropansäureallylester. Besonders geeignet sind Hydroxyethyl-, Hydroxypropyl- und/oder Butandiol-1.4-(meth)acrylat.

Die Auswahl der radikalisch polymerisierbaren Monomeren, die keine weiteren reaktiven Gruppen enthalten, erfolgt nach den mechanischen Eigenschaften des Films und der Verträglichkeit der dabei eingesetzten Harzkombination. Es werden Acrylsäure-alkylester, Methacrylsäure-alkylester, Maleinsäure-und/oder Fumarsäure-dialkylester eingesetzt, wobei die Alkylreste aus 1 bis 20 Kohlenstoffatomen bestehen und in linearer oder verzweigter aliphatischer Kette und/oder als cycloaliphatischer und/oder (alkyl)aromatischer Rest angeordnet sind. "Harte" Monomere mit einer hohen Glasübergangstemperatur als Polymere sind beispielsweise Monomere vom Vinylaromatentyp wie Styrol, α-substituierte Styrole wie α-Methylstyrol, o-, m-und p-Alkylstyrole wie Vinyltoluol oder p-tert-Butylstyrol, halogenierte Vinylbenzole wie o- oder p-Chlorstyrol, Methacrylsäureester mit kurzer Kette wie Methylmethacrylat, Ethylmethacrylat, Propylmethacrylat, Butylmethacrylat, Cyclohexylmethacrylat, Isobornyl-methacrylat, Dihydrodicyclopentadienyl-methacrylat, (Meth)-acrylamid und/oder auch (Meth)acrylnitril. "Weiche" Monomere sind dagegen Acrylsäureester mit einer langen Alkoholkette wie n-Butylacrylat, Isobutylacrylat, tert.-Butylacrylat, 2-Ethylhexylacrylat und/oder Laurylacrylat. Es können auch ungesättigte Ether wie Ethoxyethylmethacrylat oder Tetrahydrofurfurylacrylat eingesetzt werden.Monomere vom Vinylestertyp, vorzugsweise Vinylester-α-verzweigter Monocarbonsäuren, besonders der Versaticsäure-vinylester, können auch einpolymerisiert werden, wenn geeignete Reaktionsbedingungen und Reaktionscomonomere ausgewählt werden. Unter ethylenisch polyungesättigten Monomeren werden Verbindungen mit mindestens 2 radikalisch polymerisierbaren Doppelbindungen nach der allgemeinen Formel R-CH=CR'-D-(-CR'=CH-R)$_m$, mit m=1 bis 3, bevorzugt m=l, verstanden, wobei außer den weiter oben angegebenen Bedeutungen D das allgemeine, tragende chemische Grundgerüst für die reaktive Doppelbindung ist. Beispiele für D sind der o-,m-oder p-Phenylrest und Reste der Formel -X-Alkyl-X'-, worin Alkyl bevorzugt 2 bis 18 C-Atome aufweisen, X und X' gleiche oder verschiedene verbindende Gruppen, z.B.-O-, -CONH-, -COO-, -NHCOO-oder -NH-CO-NH-sind. D kann z.B. ein Benzolring wie im Divinylbenzol sein, der gegebenenfalls auch substituiert sein kann wie p-Methyldivinylbenzol oder o-Nonyldivinylbenzol. Weitere Beispiele für geeignete polyungesättigte Monomere sind Reaktionsprodukte aus Polyalkoholen, besonders Dialkoholen,mit α,β-ungesättigten Carbonsäuren, wie sie schon definiert sind. Beispiele hierfür sind Ethanoldioldiacrylat, Ethylenglykoldimethacrylat, 1.4-Butandiol-diacrylat, 1.6-Hexandiol-diacrylat. Neopentylglykol-dimethacrylat, Triethylenglykol-dimethacrylat, Polyglykol-400-diacrylat, Glycerin-dimethacrylat, Trimethylolpropantriacrylat und/oder Pentaerythrit-diacrylat. Urethan- und amidgruppenhaltige polyfunktionelle Monomere werden hergestellt durch Reaktion von beispielsweise Hexandiisocyanat oder Methacrylsäure-β-isocyanatoethylester mit Hydroxyethyl(meth)-acrylat oder (Meth)acrylsäure. Beispiele für anders aufgebaute geeignete Verbindungen sind Allylmethacrylat, Diallylphthalat, Butandiolvinylether, Divinylethylenharnstoff, Divinylpropylenharnstoff, Maleinsäurediallylester, Bis-maleinimide, Glyoxabisacrylamid und/oder das Reaktionsprodukt von Epoxidharz mit (Meth)acrylsäure oder Fumarsäurehalbestern. Bevorzugt wird der Einsatz von difunktionellen ungesättigten Monomeren wie Butandio-diacrylat oder Hexandiol-diacrylat. Bei Verwendung von Glycidyl-methacrylat und Methacrylsäure entsteht das entsprechende Glycerindimethacrylat automatisch bei der Polymerisation. Die Art und Menge an polyungesättigten Monomeren ist mit den Reaktionsbedingungen (Katalysatoren, Reaktionstemperatur, Lösemittel) sorgfältig abzustimmen, um die gewünschte hohe Viskosität ohne Gelierung zu erhalten.

Die Copolymerisation erfolgt in bekannter Weise durch Lösungspolymerisation unter Zusatz von radikalischen Initiatoren, sowie gegebenenfalls Molekulargewichtsreglern bei Temperaturen von 50 bis 160°C. Sie erfolgt in einer Flüssigkeit, in der sich Monomere und Polymere gemeinsam lösen. Der Gehalt an Monomeren bzw. Polymeren nach der Auspolymerisation beträgt dabei etwa 50 bis 90 Gew.-%. Es wird eine Lösungspolymerisation in organischen Lösemitteln bevorzugt, die mit Wasser verdünnbar sind.Solche Lösemittel sind beispielsweise Ethylenglykol, Ethoxyethanol, Butoxyethanol, Diethylenglykol, Triethylenglykol, Diethylenglykoldimethylether, Propylenglykol, Methoxypropanol, Ethoxypropanol, Dipropylenglykol-monomethylether, Dipropylenglykol-dimethylether, Diacetonalkohol, Ethanol, Isopropanol, sek. Butanol, tert. Butanol, Aceton, Methoxypropanon, Dioxan, Tetrahydrofuran, N-Methylpyrrolidon oder ihren Gemischen. Zur Verlaufsverbesserung und zum Senken des Schichtwiderstandes kann auch anteilweise ein nicht-wasserlösliches, hochsiedendes Lösemittel zugesetzt werden wie Hexylenglykol, Phenoxyethanol, Ethylhexanol, Isodekanol oder 2.2.4-Trimethylpentandiol-1.3-monoisobutyrat. Im allgemeinen wird das Lösemittel bzw. Lösemittelgemisch bis zur Reaktionstemperatur erwärmt und dann das Monomerengemisch über mehrere Stunden zulaufen gelassen. Um bei Rückflußtemperatur arbeiten zu können, wird der Initiator auf die Siedetemperatur des Lösemittelgemisches abgestimmt. Er zerfällt dabei üblicherweise mit einer Halbwertzeit von 30 Minuten bis zu 10 Stunden.Der Initiator wird entweder im Monomerengemisch kalt gelöst oder aus Sicherheitsgründen während des Zulaufs der Mono-meren getrennt zudosiert. Als Katalysatoren, die in organischen Lösemitteln löslich sind, werden 0,1 bis 5 Gew.-%, bevorzugt 0,5 bis 3 Gew.-% bezogen auf die eingesetzte Monomeren-Menge an Peroxiden und/oder Azo-Verbindungen zugesetzt. Als Peroxide werden beispielsweise verwendet Benzoylperoxid oder Di-tert.-butylperoxid, Hydroperoxide wie tert.-Butylhydroperoxid oder Cumolhydroperoxid und Perester wie tert.-Butylperoctoat oder tert.-Butylperbenzoat. Thermisch zerfallende Azo-Verbindungen sind beispielsweise 2 .2'-Azo-bis-(2-cyanopropan) oder 1.1'-Azo-bis-cyclohexancarbonitril. Als Initiatoren können auch radikalbildende Verbindungen vom Dibenzyltyp wie 1.2-Bis-(4-methylphenyl)1.2-dicarbethoxy-1.2-dicyanoethan verwendet werden. Durch den Einsatz von Reglern kann die Molmasse in bekannter Weise herabgesetzt werden. Bevorzugt werden hierzu Mercaptane, halogenhaltige Verbindungen und andere radikalübertragende Substanzen eingesetzt. Besonders bevorzugt sind n-oder tert.-Dodecylmercaptan. Tetrakis-mercaptoacetylpentaerythrit, tert.-Butyl-o-thiokresol, Thiosalicylsäure, Buten-1-ol oder dimeres $\alpha$-Methylstyrol.

Die Herstellung von Amino-(Meth)acrylatharzen kann auch durch polymeranaloge Umsetzung geschehen. So kann man beispielsweise ein Acrylamidgruppen enthaltendes Copolymeres mit Formaldehyd und einem sekundären Amin und/oder Aminoalkohol umsetzen. Ein besonders bevorzugtes Verfahren wird in der DE-A-34 36 346 beschrieben. Hier werden zunächst epoxidgruppenhaltige monoethylenisch ungesättigte Monomere in das Copolymere einpolymerisiert. Danach wird mit überschüssigem Ammoniak,primären und/oder sekundären Monoaminen und/oder Monoaminoalkoholen umgesetzt und anschließend der Aminüberschuß abdestilliert. Eine ähnliche Umsetzung kann beispielsweise bevorzugt in äquivalenten Mengen mit Ketiminen von Polyaminen erfolgen, die eine sekundäre Aminogruppe und eine oder mehrere primäre Aminogruppen enthalten wie beispielsweise das Monoketimin aus Methylisobutylketon und Methylaminopropylamin oder das Diketimin aus Methylisobutylketon und Diethylentriamin. Epoxidgruppen enthaltende radikalisch polymerisierbare monoethylenisch ungesättigte Monomere sind Mono-und/oder Diglycidylverbindungen von $\alpha,\beta$-ungesättigten Säuren, Säureamiden, Alkoholen oder Aminen wie beispielsweise Gylcidylester der (Meth)acrylsäure, der Fumarsäure und/oder Maleinsäure, der Fumarsäure-und/oder Maleinsäuremonoalkylester, sowie Glycidylverbindungen von (Meth)-acrylsäureamid, Fumarsäurediamid, Maleinsäurediamid oder Maleinimid und/oder Glycidylether von ungesättigten Alkoholen wie Vinyl-und/oder Allylalkohol. Andere geeignete Verbindungen sind Monoglycidylester von Dicarbonsäuremonoestern mit ungesättigten Alkoholen wie Phthalsäure-allyl-glycidylester. Es können jedoch auch Vinyl-und Allylester von epoxidierten Fettsäuren eingesetzt werden wie 2.3-Epoxy-buttersäure-allylester oder Epoxy-stearinsäureallylester. Außerdem eignen sich auch Diolefine, deren eine Doppelbindung epoxidiert worden ist, wie Vinyl-ethylenoxid, 1-Methyl-1-vinyl-ethylenoxid oder 3.4-Epoxy-1-vinyl-cyclohexan. Glycidylacrylat und Glycidylmethacrylat werden für die Copolymerisation bevorzugt. Der Anteil von Epoxidgruppen enthaltenden ungesättigten Monomeren im Copolymerisat beträgt im allgemeinen 8 bis 50 Gew.-%. Die untere Grenze liegt bevorzugt bei 12 Gew.-%, die obere Grenze bei 35 Gew.-%. Die Polymerisation muß vollständig abgelaufen sein, bevor die Umsetzung mit Aminen stattfindet, weil sonst reversible Nebenreaktionen an den aktivierten Doppelbindungen der Monomeren mit den sekundären Aminen auftreten.

Als sekundäre Amine für die Umsetzung mit den Epoxidgruppen sind besonders zweckmäßig sekundäre Amine der Formel

$R^1$-NH-$R^2$

wobei

$R^1$ = -H oder $R^2$

$R^2$ = $-C_nH_{2n+1}$, $-C_nH_{2n}OH$ und/oder $-C_nH_{2n}-N=C(Alkyl)_2$

und n = 1 bis 8, bevorzugt 1 bis 2 betragen,

und Alkyl 1 bis 8 C-Atomen hat.

Folgende Amine können beispielsweise für die Reaktion eingesetzt werden: $C_1$ bis $C_6$-Dialkylamine mit gleichen oder verschiedenen Alkylgruppen im Molekül wie Dimethyl-, Diethyl-, Diisopropyl-, Dibutyl-, Methylethyl-, Methylpropyl-, Methylbutylamin, monocycloaliphatische Amine wie Morpholin, Piperidin, Pyrrolidin und/oder Monoalkanolamine wie N-Methylaminoethanol und/oder Dialkanolamine wie Diethanolamin, Diisopropanolamin. Beispiele für primäre Amine oder Aminoalkohole sind $C_1$ bis $C_8$-Alkylamine wie Ethylamin, 2-Ethylhexylamin oder Aminoethanol. In jedem Fall sind $C_1$ bis $C_4$-Alkylgruppen, insbesondere $C_1$ und/oder $C_2$-Alkylgruppen bevorzugt. Besonders bevorzugt sind sekundäre Amine wie Dimethylamin,Diethylamin,Methylethylamin oder N-Methylaminoethanol,weil damit nach Neutralisation gut lösliche ET-Bäder mit hohem pH-Wert erhalten werden können.Die oben erwähnten primären Amine werden meistens im Gemisch mit sekundären Aminen eingesetzt, weil sonst zu hochviskose Produkte entstehen.

Die Zahl der primären und/oder sekundären Hydroxylgruppen wird so optimiert, daß beim Einbrennen des Lacks ein gut vernetzter, lösemittelbeständiger Film entsteht. Berücksichtigt man, daß beim Umsetzen mit Amin aus jeder Epoxidgruppe eine sekundäre OH-Gruppe entsteht, so ist es angebracht, mindestens eine weitere Hydroxylgruppe pro Molekül, bevorzugt primäre Hydroxylgruppe über andere ungesättigte Monomere einzupolymerisierten. Die Zahl der Epoxidgruppen bestimmt die Zahl der damit zur Umsetzung kommenden Aminogruppe und damit auch die Löslichkeit des Produktes. Es soll mindestens eine Epoxidgruppe pro Molekül vorhanden sein. Oft ist es vorteilhaft,eine erhöhte Hydroxylzahl mit einer niedrigen Aminzahl und umgekehrt zu kombinieren. Das Entwicklungsziel ist im allgemeinen ein gut lösliches Produkt bei niedrigem Neutralisationsgrad und möglischt hohem pH-Wert.

Die vorstehend beschriebenen fremdvernetzenden epoxidgruppenfreien Aminopoly(meth)acrylatharze werden als Bindemittel für die kathodische Abscheidung in ET-Bädern (KTL-Bädern) verwendet.

Außer den vorstehend beschriebenen Aminogruppen enthaltenden hydroxylgruppenhaltigen Poly(meth)acrylatharzen können auch hydroxylgruppenhaltige Poly(meth)acrylatharze eingesetzt werden, die als ionische Gruppen saure Gruppen enthalten. Beispiele für derartige saure Gruppen enthaltende Harze sind carboxylgruppenhaltige, Sulfosäure-und/oder Phosphorsäuregruppen enthaltende Harze. Besonders bevorzugt werden Carboxylgruppen, die das Harz nach Neutralisation mit Basen in Wasser verdünnbar machen. Ein derartiges Carboxylgruppen und Hydroxylgruppen enthaltendes Poly(meth)acrylatharz wird bevorzugt durch radikalische Polymerisation in Lösung erhalten. Es weist bevorzugt eine Säurezahl von 25 bis 150, insbesondere 40 bis 80 (mg KOH pro g Festharz) auf. Es wird bevorzugt so gearbeitet, daß 2 bis 40 Gewichtsteile der radikalisch polymerisierbaren säuregruppenhaltigen Monomeren (Komponente a) ), 4 bis 50 Gewichtsteile der radikalisch polymerisierbaren hydroxylgruppenhaltigen Monomeren (Komponente b) ) oder 10 bis 90 Gewichtsteile der radikalisch polymerisierbaren Monomeren, die keine weiteren reaktiven Gruppen enthalten (Komponente c) )eingesetzt werden. Als Carbonsäuregruppen enthaltende Monomere werden Monomere der allgemeinen Formel

$R^3\text{-}CH = CR^4\text{-}COOH$

eingesetzt,worin

$R^3$ = -H, -COOH, $-C_nH_{2n+1}$ oder $-COOC_n H_{2n+1}$

$R^4$ = -H, oder $-C_nH_{2n+1}$',

n = 1 bis 6

bedeuten.

Beispiele hierfür sind Acrylsäure, Methacrylsäure, Crotonsäure, Fumarsäure, Maleinsäuremonoalkylester, Itaconsäure-monoalkylester. Bevorzugt sind Acrylsäure und Methacrylsäure.

Andere ionische Gruppen sind Sulfosäure-und Phosphorsäuregruppen. Beispiele für entsprechende ungesättigte Monomere sind 2-Amido-2-methyl-sulfonsäure, Vinylbenzylsulfonsäure, Vinylphosphorsäure oder Methacrylsäurehexapropylenglykol-monophosphat.

Die Komponenten b) und c) entsprechenden den schon beschriebenen hydroxylgruppenhaltigen Monomeren und monoethylenisch ungesättigten Monomeren, die keine weiteren reaktiven Gruppen enthalten. Ähnliche Polymerisate,die verwendet werden, sind bekannt und werden beispielsweise in der DE-PS 10 53 696, der DE-PS 12 97 789 oder der CH-PS 427 109 beschrieben.

Als Komponente B) wird erfindungsgemäß ein Mischpolymeres eingesetzt, das erhältlich ist durch Umsetzung von

a) 80 bis 95 Gew.-% eines Copolymerisats aus

a1) 0,5 bis 40 Gew.-% N[N,N-Di-$C_{1 bis 4}$-alkylamino-$C_{1 bis 8}$-alkyl] (meth)acrylamide und/oder einem Gemisch von N,N-Di-$C_{1 bis 4}$-alkylamino-$C_{1 bis 8}$-alkyl(meth)acrylaten und N-substituierte (Meth)acrylamiden und/oder (Meth)acrylamid, wobei das Verhältnis der Amino(meth)acrylate zu den Amido(meth)acrylaten 1:2 bis 2:1 sein soll,

a2) 10 bis 40 Gew.-% Hydroxy-$C_{2-8}$-alkyl-(meth)acrylate,

a3) 20 bis 89.5 Gew.-% copolymerisierbare $\alpha,\beta$-olefinisch ungesättigte Verbindungen, und

b) 5 bis 20 Gew.-% eines unverkappte und gegebenenfalls auch verkappte Isocyanatgruppen aufweisenden Polyisocyanats, das Biuret-, Urethan- oder Isocyanurat-Gruppen aufweist.

Die Komponente a) ist ein Copolymerisat aus den oben genannten Monomeren. Verbindungen der Komponente a1) können im Molekül sowohl eine tertiäre Amino-Gruppe als auch eine N-substituierte Amid-Gruppe enthalten, z.B. N[N,N-Dimethylaminopropyl]methacrylamid. Derartige Verbindungen können zur Herstellung des erfindungsgemäßen Copolymerisats allein oder in Kombination mit tertiäre Amino-Gruppen tragenden (Meth)acrylaten und/oder N-substituierten (Meth)-acrylamiden und/oder (Meth)acrylamid eingesetzt

werden. Es können aber auch Gemische aus tertiäre Amino-Gruppen enthaltende (Meth)-acrylaten und N-substituierten (Meth)acrylamiden oder (Meth)acrylamid zum Einsatz kommen.

Das angewendete Kombinationsverhältnis der Verbindungen,die tertiäre Aminogruppen enthalten, zu den Verbindungen, die N-substituierte oder unsubstituierte Amidgruppen enthalten, beträgt vorzugsweise 1:1.1 bis 1.1:1.

Als Monomerkompente a) kommen bevorzugt die folgenden Verbindungen in Frage:
Beispiele für N[N,N-Di-$C_{1bis4}$ -alkylamino-$C_{1bis8}$-alkyl] (meth)acrylamide sind N[N,N-Diethylaminopropyl]methacrylamid, die entsprechende Di-n-butylverbindung, N[N,N-Dimethylaminoneopentyl]methacrylamid sowie die entsprechenden Aminomethyl-und Aminooctylverbindungen. Besonder bevorzugt ist N[N,N-Dimethylaminopropyl]methacrylamid.

Anstelle oder zusätzlich zu N[N,N-Di-$C_{1bis4}$-amino-$C_{1bis8}$-alkyl] (meth)acrylamiden kann ein Gemisch von N,N-Di-$C_{1bis4}$-alkylamino-$C_{1bis8}$-alkyl-(meth)acrylaten und N-$C_{1bis12}$ -alkyl(meth)-acrylamiden oder N-$C_{1bis12}$-cycloalkyl(meth)-acrylatmiden oder N-$C_{1bis12}$-aralkyl(meth)-acrylamiden und/oder (Meth)acrylamid eingesetzt werden.

Beispiele für N,N-Di-$C_{1bis4}$-alkylamino-$C_{1bis8}$ -alkyl(meth)acrylate sind:
N,N-Dimethylaminoethylacrylat, N,N-Dimethylaminoethylmethacrylat, N,N-Diethylaminoethylacrylat, N,N-Dimethylaminoneopentylacrylat. Der Alkylteil der am Stickstoffatom gebundenen Alkylgruppen enthält vorzugsweise 1 oder 2 C-Atome. Die Alkylengruppe zwischen dem Stickstoffatom und der Estergruppe enthält zweckmäßig 2 bis 8 C-Atome.

Beispiele für N-substituierte (Meth)acrylamide sind:
N-Methyl-, N-Ethyl-, N-n-Propyl-, N-Isopropyl-, N-n-Butylacrylamid, N-Methylmethacrylamid, N-(1,1-Dimethyl-3-oxobutyl)-acrylamid, N-tert.-Butyl-methacrylamid, N-Decylacrylamid, N-Cyclohexylmethacrylamid, N-Benzylmethacrylamid und N-Alkoxymethyl(meth)acrylamide, wie z.B. N-n-Butoxymethylacrylamid und N-n-Butoxymethylmethacrylamid.

Als N-Substituenten für die (Meth)acrylamide kommen aliphatische, cycloaliphatische oder aromatische Gruppen in Frage, wie sie in (Meth)-acrylamiden des Stands der Technik vorliegen, die zur Herstellung von Acrylatharzen eingesetzt werden. Diese Gruppen können auch Heteroatome enthalten, und in diesem Sinne könne z.B. auch Keto-Gruppen als N-Substituenten vorliegen.

Als Komponente a2) können die auf dem Gebiet der Acrylatharze üblichen Hydroxyacrylate eingesetzt werden. Vorzugsweise sind dies Hydroxyethylacrylat, Hydroxyethylmethacrylat, 2-Hydroxypropylacrylat, 2-Hydroxypropylmethacrylat, 4-Hydroxybutylacrylat und 4-Hydroxybutylmethacrylat.

Als Komponente a3) werden die zur Herstellung von Acrylaten üblicherweise eingesetzten copolymerisierbaren $\alpha,\beta$-olefinisch ungesättigten Verbindungen verwendet. Beispiele hierfür sind: Vinylaromaten, wie Styrol,$\alpha$-Methylstyrol, o-, m-p-Methylstyrol, p-tert.-Butylstyrol, wobei Styrol bevorzugt ist; Alkylester der (Meth)acrylsäure, wie Methyl-, Ethyl-, Propyl-, n-Butyl-, iso-Butyl-, tert.-Butyl-, Hexyl-, Octyl-, Decyl-, Dodecyl-, Hexadecyl-, Octadecyl-Acrylat bzw. -Metharcylat, wobei n-Butyl-, iso-Butyl-, tert.-Butylacrylat, 2-Ethylhexylacrylat und Methyl-, n-Butylmethacrylat bevorzugt sind; Vinylester, wie Vinylacetat, Vinylpropionat, Vinylversatat; Alkylester ungesättigter Polycarbonsäuren z.B. der Malein-, Fumar-, Croton-, Itancon-und Citraconsäure.

Das Gewichtsverhältnis der Komponenten a1); a2); a3) beträgt vorzugsweise 12bis30:30bis40;30bis60.

Die Herstellung des eingesetzten Copolymerisats kann durch Polymerisation nach üblichen Verfahren, z.B. der Stubstanz-, Lösungs-oder Perlpolymerisation durchgeführt werden. Die verschiedenen Polymerisationsverfahren sind gut bekannt und beschrieben in: Houben-Weyl, Methoden der Organischen Chemie, 4. Auflage, Band 14/1, Seiten 24-255 (1961) und sind schon vorher bei der Herstellung der Komponente A) beschrieben.

Das Lösungspolymerisationsverfahren wird bei der Herstellung des erfindungsgemäßen Copolymerisats bevorzugt, weil die Umsetzung des hydroxyfunktionellen Polymerisats mit teilverkappten oder unverkappten Polyisocyanaten einfacher durchgeführt werden kann und das Pigmentdispergiermittel in gelöster Form zur Anwendung kommt.

Die Polymerisationsbedingungen (Reaktionstemperatur, Zulaufzeit der Monomerenmischung, Lösungskonzentration) werden so gewählt, daß das Zahlenmittel der Molmasse (bestimmt durch Gelpermeationschromatographie unter Verwendung von Polystyrol als Eichsubstanz) zwischen 3000 und 100 000 liegt.

Die hergestellten Copolymerisate liegen in einem Glasübergangstemperaturbereich von -20°C bis +75°C, berechnet aus der in der Literatur angegebenen Glasüberganstemperatur der Homopolymerisate der einzelnen Monomeren (Fox-Gleichung).

Eine wesentliches Merkmal der Mischpolymerisate der vorliegenden Erfindung ist, daß die vorstehend beschriebenen Copolymerisate umgesetzt werden mit Polyisocyanaten b). Die

hierfür gemäß der Erfindung eingesetzten Polyisocyanate müssen mindestens teilweise unverkappte Isocyanatgruppen enthalten, die mit den OH-Gruppen der Komponente a) reagieren. Die Polyisocyanate können zusätzlich auch noch verkappte Isocyanatgruppen enthalten. Bevorzugt sind teilweise verkappte Polyisocyanate.

Als Verkappungsmittel werden CH-, NH-oder OH-acide Verbindungen verwendet wie Malonsäuredialkylester, Acetessigsäurealkylester, Acetylaceton, ε-Caprolactam, Hydroxybenzoesäureester, tert.-Butanol und Oxime, wie Methylethylketoxim, Dimethylketoxim. Besonders bevorzugt sind Acetessigsäureethylester, Methylethylketoxim und ε-Caprolactam.

Das Verhältnis Polyisocyanat: Verkappungsmittel wird so gewählt, daß nach Durchführung der Verkappungsreaktion rein rechnerisch mindestes eine NCO-Gruppe pro Molekül eingesetztem Polyisocyanat frei verfügbar ist für die Umsetzung des teilweise verkappten Polyisocyanats mit dem OH-gruppenhaltigen Copolymerisat (Komponente a) ).

Die Mengenverhältnisse der umzusetzenden beiden Harzkomponenten Copolymerisat a) und teilweise oder unverkappte Polyisocyanate b) werden zweckmäßig so veranschlagt, daß das Äquivalentverhältnis der reaktionsfähigen Hydroxylgruppen des Copolymerisats a) zu den Isocyanatgruppen des teilweise oder unverkappten Polyisocyanats b) sich verhält wie 99:1 bis 70:30, vorzugsweise 95.:5 bis 85:15.

Die gemäß der Erfindung verwendeten Polyisocyanate enthalten in ihrem Molekül Biuret-, Urethan-oder Isocyanuratgruppen, und zwar im wesentlichen deshalb, weil gemäß der Erfindung als Polyisocyanate Handelsprodukte als Ausgangsprodukte verwendet werden und diese solche Gruppen enthalten.

Da es gemäß der Erfindung zweckmäßig ist, daß die zur Umsetzung mit der Komponente a) eingesetzten Polyisocyanate nur eine freie Isocyanatgruppe pro Molekül enthalten, könne die Handelsprodukte mit einer solchen Menge Verkappungsmittel umgesetzt werden, so daß im Mittel pro Molekül Polyisocyanat noch eine freie Isocyanatgruppe verbleibt. Beispiele für derartige Polyisocyanate sind ein Biuretgruppen enthaltendes Umsetzungsprodukt von Hexamethylendiisocyanat und Wasser, beispielsweise aus 3 Molen Hexamethylendiisocyanat mit 1 Mol Wasser mit einem NCO-Gehalt von etwa 22% (entsprechend dem Handelsprodukt Desmodur N® BAYER); ein Isocyanuratgruppen enthaltendes Polyisocyanat, das beispielsweise durch Trimerisierung von Hexamethylendiisocyanat hergestellt wird, mit einem NCO-Gehalt von etwa 21,5% (entsprechend dem Handelsprodukt Desmodur 3309® BAYER); oder Urethangruppen enthaltende Polyisocyanate, beispielsweise Reaktionsprodukte aus 3 Molen Diisocyanat mit 1 Mol Triol, z.B. Toluylendiisocyanat und Trimethylolpropan (NCO-Gehalt etwa 17,5% entsprechend dem Handelsprodukt Desmodur L® BAYER).

Die erfindungsgemäße Bindemittelkombination kann außer den Aminopoly(meth)acrylatharzen (Komponente A) ) und dem Mischpolymeren, auch als Pastenbindemittel bezeichnet (Komponente B) ) noch Vernetzungsmittel enthalten, die nachfolgend als Komponente C) bezeichnet werden, mit üblichen Zusatzstoffen, wie dies im einzelnen beschrieben ist in den eingangs genannten Patentschriften betreffend KTL-Bäder, die teilweise nachfolgend genauer erörtert werden. Beispiele für Komponente C) sind für die Kombination mit sauren Poly(meth)acrylatharzen Formaldehyd-Kondensationsharze (Harnstoff-, Melamin-, Benzoguanamin und/oder Phenol-Formaldehydharze) und/oder blockierte Polyisocyanate. Basische Polymerisatharze werden mit blockierten Polyisocyanaten und/oder mit umesterungsfähigen Estergruppen enthaltenden Harzen unter Zusatz von üblichen Katalysatoren gemischt. Um die guten Eigenschaften des Amino-Poly(meth)acrylatharzes auszunutzen und ET-Bäder mit möglichst hohem pH-Wert zu erhalten, werden nicht vergilbende blockierte aliphatische oder cycloaliphatische Polyisocyanate oder nicht vergilbende Harze mit umesterungsfähigen Estergruppen oder ihre Mischungen bevorzugt.

Wie gemäß dem Stand der Technik werden auf 50 bis 95 Gew.-% der Komponenten A) und B) 50 bis 5 Gew.-% Vernetzungsmittel eingesetzt, wobei als Vernetzungsmittel die aus dem Stand der Technik (vgl. die eingangs genannten Literaturstellen) bekannten Produkte eingesetzt werden können. Die KTL-Bäder können gegebenenfalls zusätzlich bis zu 30 Gew.-% hydroxyfunktionelle Harze einemulgiert enthalten, die mit den Vernetzungsmitteln reaktionsfähig sind (vgl. z.B. EP-A-0 040 090).

Das Mischungsverhältnis der Komponenten A) und B) zu C) liegt bevorzugt zwischen 90 zu 10 und 60 zu 40 und wird empirisch aus den optimal erreichbaren anwendungstechnischen Eigenschaften bei der gegebenen Einbrenntemperatur bestimmt. Eine Kombination mehrerer Vernetzungssysteme kann in bstimmten Fällen von Vorteil sein. Das Vernetzungsmittel hat eine mittlere Molmass ($\overline{M}$ n) von etwa 250 bis 5000, speziell 500 bis 3000.

Amin-Formaldehyd-Kondensationsharze entstehen durch Reaktion von Aldehyden mit Harnstoff, N-Alkyl-harnstoff, Dicyandiamid, verschiedenen Triazinen, wie Melamin, Benzoguanamin und Acetoguanamin oder ihren Mischungen. Die Aldehyde können dabei monofunktionell, aber auch polyfunktionell sein.Beispiele hierfür sind Formaldehyd und sein Polymerisationsprodukte, wie Paraformaldehyd, Polyoxymethylen, Trioxan, oder aliphatische

und cyclische Aldehyde, wie Glyoxal, Acetaldehyd, Acrolein, Propionaldehyd, Butyraldehyd und Furfural. Je nach Reaktionsbedingungen und Methylolierungsgrad werden Harze mit verschiedenen Molekulargewichten und unterschiedlicher Reaktivität erhalten. Die Kondensation mit Formaldehyd, Furfural, Paraformaldehyd, Polyoxymethylen oder Trioxan wird im allgemeinen unter Zusatz von - schwachen Säuren oder Basen als Katalysator ausgeführt. Starke Säuren werden verwendet bei Kondensation mit Acrolein, Glyoxal, Acetaldehyd, Propionaldehyd oder Butyraldehyd. Hierbei wird das primäre Reaktionsprodukt neutralisiert, dann Aldehyd zugesetzt und unter Zusatz von schwachen Säuren oder Basen weiter reagiert. Der bevorzugte Aldehyd ist Formaldehyd. Die Alkohol-, bevorzugt Methylolgruppen, der Aldehyd-Kondensationsprodukte werden teilweise oder bevorzugt vollständig mit Alkoholen verethert. Es werden solche Amin-Formaldehydharze bevorzugt, deren Hauptmenge an Methylolgruppen mit Monoalkoholen oder deren Gemischen umgesetzt ist. Besonders bevorzugt werden Methanol, Ethanol, Propanol, Butanol, Heptanol, Benzylalkohol und andere aromatische Alkohole, cyclische Alkohole, wie Cyclohexanol, oder Monoether von Ethylenglykolen, wie Ethoxyethanol oder Butoxyethanol. Sollen Alkohole mit mehr als 4 C-Atomen eingebaut werden, so wird die Methyolgruppe erst mit einem niedrigeren Alkohol verethert und anschließend der höhere Alkohol durch Umetherung eingeführt. Die bevorzugten Alkohole sind niedere aliphatische Monoalkohole, wie Methanol und/oder Butanol. Besonders bevorzugt werden Melaminharze, die mit 3 bis 6 Molen Formaldehyd umgesetzt und anschließend vollständig mit Methanol verethert sind. Die Harze werden nach dem Stand der Technik hergestellt und von vielen Firmen als Verkaufsprodukte angeboten. Bei Veretherung mit Hydroxycarbonsäuren wie Hydroxybenzoesäure, Salicylsäure oder Dimethylolpropionsäure entstehen carboxylgruppenhaltige, bei Verwendung von Hydroxy-alkyl(meth)acrylaten oder Allylalkohol ungesättigte Melaminharztypen.

Die bevorzugten Phenolharze sind Reaktionsprodukte von Phenol oder substituierten Phenolen mit verschiedenen Aldehyden im molaren Überschuß in Gegenwart alkalischer Katalysatoren (Resol-Typ). Beispiele für phenolische Verbindungen sind Phenol, Kresol, Xylenol, Resorcin und substituierte Phenole wie p-tert.-Butylphenol, p-tert.-Amylphenol, p-Phenyl-phenol, Isothymol, Cardanol oder auch mehrkernige Phenole wie Dihydroxy-diphenylpropan (Bisphenaol A) oder Dihydroxy-diphenylmethan. Als Ausgangsmaterial dienen auch phenolische Novolakharze, die gegebenenfalls mit Monocarbonsäuren, bevorzugt $\alpha$-verzweigten Monocarbonsäuren, Monophenolen, die besonders mit C2 bis C18 Alkylgruppen substituiert sind oder auch Monoepoxiden wie $\alpha$-Monoepoxidalkane, Monoglyceridether oder Monoglyceridester, defunktionalisiert werden. Als Aldehyde finden Verwendung Formaldehyd und seine Polymerisationsprodukte wie Paraformaldehyd, Trioxymethylen, Polyformaldehyd oder auch Hexamethylentetramin. Gut geeignet sind Acetaldehyd, Paraldehyd und Metaldehyd, sowie Butyraldehyd oder Furfural. Die Methylolgruppen werden teilweise oder bevorzugt vollständig verethert mit Methanol, Ethanol, Propanol und/oder Butanol. Bevorzugt werden Harze, die pro phenolischer OH-Gruppe mit überschüssigem Formaldehyd, d.h. etwa 1.1 bis 2.5 Mol Formaldehyd in alkalischem Medium umgesetzt werden. Harze auf Basis Bisphenol A, die mit etwa 4 Formaldehyd-Molekülen umgesetzt und vollständig mit Butanol verethert sind, werden besonders bevorzugt. Es können sowohl wasserunlösliche, wie auch carboxylgruppenhaltige Phenolharze verschiedener Molmassen verwendet werden. Hierfür geeignete Phenolcarbonsäuren sind beispielsweise 4,4-Bis-(4-hydroxyphenyl)-pentansäure, Glykolsäurederivate von Bisphenolen, wie das 2-(4-Hydroxyphenyl)-2(carbethoxyphenyl)-propan, oder Salicylsäure. Gegebenenfalls können auch sehr niedrigmolekulare, gegebenenfalls ungesättigte Methylolphenolether eingesetzt werden wie die Methylonharze.

Blockierte Polyisocyanate werden dadurch hergestellt, daß man ein multifunktionelles Isocyanat mindestens mit einer stöchiometrischen Menge einer monofunktionellen, aktiven Wasserstoff (Zerewitinoff-Reaktion) enthaltenden Verbindung vollständig umsetzt, wobei gegebenenfalls basische Katalysatoren wie tert.-Amine oder geringe Mengen an Zinnsalzen wie Dibutylzinndilaurat zugegeben werden können. Die Isocyanatgruppe wird auf diese Weise bei Raumtemperattur gegen Reaktionen mit Wasser oder Alkoholen geschützt. Das erhaltene Reaktionsprodukt setzt sich beim Erwärmen mit den Hydroxylgruppen des ionischen Poly(meth)acrylatharzes um, wobei die Schutzgruppe wieder abgespalten wird. Sie spaltet sich bei Einbrenntemperaturen von weniger als 210°C, vorzugsweise weniger als 190°C, besonders unter 180°C, andererseits über 110°C, vorzugsweise über 140°C, besonders bevorzugt über 150°C, wieder ab, damit die freiwerdende Isocyanatgruppe mit dem Basisharz reagieren kann. Mittel, die die Isocyanate blockieren, enthalten nur eine einzige Amin-, Amid-, Lactam-, Thiol-, oder Hydroxylgruppe.

So haben sich beispielsweise bewährt aliphatische oder cycloaliphatische Alkohole wie 2-Ethylhexanol, Dialkylaminoalkohol wie Dimethylaminoethanol, Oxime wie Methylethylketoxim, Lactame wie $\epsilon$-Caprolactam oder Pyrrolidon-2, Imide wie Phthalimid oder N-Hydroxymaleinimid, Hydroxyalkylester, Malonsäure-oder Acetessigsäureester. Es werden aber auch β-Hydroxyglykole oder -glykolether und Glykolamide empfohlen.

Als typische multifunktionelle Isocyanate eignen sich aliphatische, cycloaliphatische und/oder aromatische Polyisocyanate mit mindestens zwei Isocyanatgruppen pro Molekül. Als aromatische Diisocyanate eignen sich die Isomeren oder Isomerengemische von Phenylendiisocyanat, Toluylendiisocyanat, Xylylendiisocyanat, Biphenylendiisocyanat, Napththylendiisocyanat und Diphenylmethan-diisocyanat, Diphenyltetraisocyanat, Naphthyltetraisocyanat. Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat, sowie die Hydrierungsprodukte der aromatischen Diisocyanate wie Cyclohexylendiisocyanat, Methylcyclohexylendiisocyanat und Dicyclohexylmethandiisocyanat. Aliphatische Diisocyanate sind Verbindungen der Formel

$$O{=}C{=}N{-}\left(CR_2\right)_r{-}N{=}C{=}O$$

worin r eine ganze Zahl von 2 bis 20, insbesondere 6 bis 8 ist und R, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiiso cyanat, Dimethylethylendiisocyanat, Methyltrimethylendiisocyanat und Trimethylhexandiisocyanat. Besonders bevorzugt werden als Diisocyanate Isophorondiisocyanat und Dicyclohexylmethan-diisocyanat.

Vinylpolymerisate, die neben Isocyanatgruppen außer z.B. Cyanatoethyl(meth)acrylat oder Dimethyl-isopropylbenzylisocyanat als Comonomere noch Alkyl(meth)acrylate und/oder (Alkyl)-vinylbenzole enthalten, können auch verwendet werden.

Gemischte aliphatisch aromatische Verbindungen sind auch geeignet.

Als Triisocyanate haben sich Produkte bewährt, die durch Trimerisation oder Oligomerisation von Diisocyanaten oder durch Reaktion von Diisocyanaten mit polyfunktionellen OH-oder NH-Gruppen enthaltenden Verbindungen entstehen. Hierzu gehören beispielsweise die schon bei der Komponente B) beschriebenen Handelsprodukte.

Falls notwendig kann die mittlere Funktionalität gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Eine Molekülvergrößerung kann auch durch Reaktion mit tert. Aminogruppen enthaltenden Polyalkoholen wie N-Methyldiethanolamin, Triethanolamin oder tertiäre Aminogruppen enthaltenden Polyaminen wie 3-(Methyl)-3-(2-Aminoethyl)-aminopropylamin erfolgen. Um die Löslichkeit zu verbessern können außerdem kettenabbrechende N-Dialkylaminoalkohole wie Dimethyl-aminoethanol oder N,N-Dialkylalkylendiamine wie Dimethylaminopropylamin oder N,N-Diethyl-N'-Methyl-1,3-ethandiamin eingesetzt werden. Isocyanathaltige Präpolymere auf Basis von Polyglykolethern, Polyesterpolyolen, Polyetherpolyolen, Polycaprolactonpolyolen und/oder Polycaprolactampolyolen können ebenfalls mit Vorteil eingesetzt werden. Um nicht-vergilbende Einschichtlacke herstellen zu können, werden aliphatische und cycloaliphatische Polyisocyanate bevorzugt.

Ein anderer geeigneter Typ Vernetzungsmittel (Komponente C) ) ist ein Harz mit endständigen oder seitenständigen, veresterten Carboxylgruppen, die im neutralen, wäßrigen Medium weitgehend stabil sind, jedoch im basischen Medium des abgeschiedenen Films bei Temperaturn über etwa 140°C mit einem oder mehreren hydroxylgruppenhaltigen Aminopoly(meth)acrylaten (Komponente A)) reagieren. Hierbei estern die umesterungsfähigen Estergruppen mit den Hydroxylgruppen des Amino-poly(meth)acrylatharzes unter Abspalten der leichter flüchtigen "alkoholischen Schutzgruppen" um. Es sollen im wesentlichen alle endständigen oder seitenständigen Carboxylgruppen mit Alkoholen verestert sein. Um ein Wandern des Polyesters zurAnode zu vermeiden, ist darauf zu achten, daß er eine Säurezahl unter 20, bevorzugt unter 10, besonders bevorzugt unter 3 hat.

Die Reaktivität der Ester wird durch geeigneten chemischen Aufbau gesteigert, z.B. durch Erhöhen der elektrophilen Aktivität der Carboxylgruppe oder durch einen negativen induktiven Effekt auf die Alkoholgruppe. Zur Umesterung befähigt sind primäre, sekundäre und tertiäre Carboxylgruppen. Aufgrund ihrer höheren Reaktivität werden primäre Carboxylgruppen bevorzugt. Die Umesterung wird unterstützt durch die Flüchtigkeit von niederen linearen oder verzweigten primären Monoalkoholen oder durch 1,2-Glykole, die gegebenenfalls durch Ether-oder Estergruppen substituiert sind. Je niedrigmolekularer die Alkohole sind, die bei der Umesterung abgespalten werden, desto niedriger sind die Spaltverluste. In der Literatur werden eine Reihe estergruppenhaltiger Vernetzungsmittel beschrieben, die zur Umesterung mit OH-Gruppen

und/oder Umamidierung mit $NH_2$-Gruppen eingesetzt werden, z.B.: In der EP-A-0 04 090 werden Polyurethanestr beschrieben, die als umesterungsfähige Gruppen Hydroxy-alkylestergruppen, wie Milchsäureester, oder Aminoalkylestergruppen enthalten.

Ein anderes Vernetzungsmittel kann ein carboxylgruppenhaltiger Polyester sein, dessen Carboxylgruppen durch gegebenenfalls substituierte 1,2-Glykole unter Bildung von $\beta$-Hydroxy-Verbindungten blockiert sind:

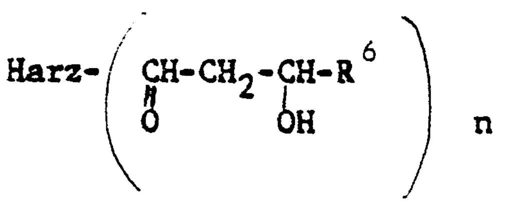

Die eingesetzten 1,2-Glykole sind zweckmäßig durch gesättigte oder ungesättigte Alkyl-, Ether-, Ester-oder Amidgruppen substituiert, d.h. $R^6$ steht für-H, $-R^7$, $-CH_2OH$, $-CH_2-O-R^7$ $-CH_2-OC(=O)-R^7$ $-CH_2NHC(=O)-R^7$,

wobei n mindestens 2, bevorzugt einen Wert von 3 bis 10, bedeutet. $R^7$ ist eine lineare oder verzweigte Alkylgruppe mit 1 bis 15 C-Atomen.

Solche Vernetzungsmittel sind in der EP-A-012 463 und DE-A-31 03 642 beschrieben, z.B. als Reaktionsprodukt von Trimellithsäureanhydrid mit Cardura E®, dem Glycidylester der Versaticsäure®.

Andere Vernetzungsmittel werden durch Umesterung von Dicarbonsäurealkylestern mit Polyalkoholen hergestellt, z.B. ein Reaktionsprodukt aus Trimethylolpropan und Malonsäuredimethylester, wie es in der EP-A-082 291 beschrieben ist.

Andere zur Umesterung befähigte Vernetzungsmittel werden, wie in der DE-A-33 15 469 beschrieben, durch Michael-Addition von Acetessigsäuralkylester oder Malonsäuredialkylester an Harze mit Doppelbindungen, die über CO-Gruppen aktiviert werden, erhalten. Die Michael-Addition kann stöchiometrisch durchgeführt werden oder auch unter Einsatz von überschüssigen Doppelbindungen.

In der DE-A-33 22 766 werden Vernetzungsmittel beschrieben, die Carbalkoxymethylestergruppen enthalten.

Die Vernetzung von OH-gruppenhaltigen Poly(meth)acrylatharzen mit blockierten Polyisocyanaten kann gegebenenfalls durch Zusatz von 0,01 bis 2 Gew.-% , speziell 0,5 bis 1 Gew.-%, bezogen auf Festharz der Komponenten A) und B), stark basische tertiäre Amine und/oder aktive Metallverbindungen beschleunigt werden. Eine besondere, manchmal synergistische Wirkung wird erreicht durch die Kombination von basischem Medium des abgeschiedenen Amino-Poly(meth)acrylatharzes und den Metallsalzen von Wismut, Blei, Cobalt, Eisen, Antimon und/oder Zinn-II und -IV. Besonders bevorzugt werden Katalysatoren wie Eisen-III-acetylacetonat, Dibutyl-zinn-dilaurat, Tri-n-butyl-zinnoxid, Dibutyl-zinn-dioctyl-maleat, Zinn-octoat, Zinnoleat, Tetrabutyltitanat und/oder Cobalt-2-ethylhexanoat.

Zur Katalyse des Umesterungsverfahrens ist im allgemeinen ein höherer Katalysatorgehalt notwendig. Zweckmäßig werden 0, 1 bis 10 Gew.-% , bevorzugt 2 bis 6 Gew.-%, bezogen auf die Komponenten A) und B), Metalloxide, Metallsalze oder Metallkomplexe von ein-oder mehrwertigen Metallen verwendet. Sie werden im allgemeinen nach Salzbildung mit 2-Ethylhexansäure oder Naphtensäure in aliphatischen und aromatischen Kohlenwasserstoffen gelöst. Diese Lösungen werden in das Elektrophoresebad einemulgiert. Eine andere Möglichkeit besteht in der Komplexbildung der Metalle mit Acetylacetonat, Dicyclopentadien, 8-Oxyhydrochinolin, 4-Methyl-catechin und/oder 2,5-Dimercapto-1,3,4-thiodiazol. Beispiele für geeignete Katalysatoren sind Antimontrioxid, Cobaltnaphtenat, Bleioctoat, Eisen-acetylacetonat, das Reaktionsprodukt aus Zinkoxid + 8-Oxyhydrochinolin, Thalliumdicyclopentadien oder Triethanolamin-titanat. Bevorzugt werden Bleioctoat und das Zink-Oxyhydrochinolat. Die Metallkatalysatoren können auch in fein verteilter Form als Pigmente wie Bleisilikat eindispergiert werden. Wasserverdünnbare Metallsalze sind ebenfalls als Umesterungskatalsatoren geeignet, wenn das Metall der Verbindung oder Komplex in fein verteilter Form mit dem Lack abgeschieden wird. Bevorzugt sind Katalysatoren, die im ET-Bad schlecht löslich sind und sich nach der elektrophoretischen Abscheidung im abgeschiedenen Film beim Einbrennen gleichmäßig verteilen.

Die Komponenten (A) und (C) können kalt gemischt oder auch bei erhöhter Temperatur präkondensiert werden. Dabei reagieren die Komponenten (A) und (C) in gewissem Umfang miteinander, ohne daß das Gemisch seine Hitzhärtbarkeit und die Eigenschaft , durch Neutralisieren wasserlöslich gemacht werden zu können, verliert.

Zum Ausbalancieren der anwendungstechnischen Eigenschaften ist es zweckmäßig, daß das elektrophoretisch abscheidbare Poly(meth)acrylatharz außer dem Vernetzungsmittel noch zusätzlich bis zu 30 Gew.-%, bevorzugt 5 bis 20 Gew.-% eines hydroxyfunktionellen Harzes enthält, das mit den Vernetzungsmitteln reagiert.

So können zum Steigern des Umgriffs hydroxyfunktionelle Harze mit einer OH-Zahl von 30 bis 500, speziell 50 bis 300 und einer mittleren Mol-

masse ($\overline{M}n$) von 300 bis 10000, speziell 500 bis 5000 eingesetzt werden. Beispiele für solche Harze sind Styrol-Allylalkohol-Copolymere, OH-gruppenhaltige (Meth)acrylcopolymere, Caprolactonpolyole, Caprolactampolyole, Urethanpolyole, OH-gruppenhaltige Polyether und Polyester. So werden OH-gruppenhaltige Copolymere durch Copolymerisation von ungesättigten, hydroxylgruppenhaltigen Monomeren mit anderen ethylenisch ungesättigten Monomeren, die keine weiteren reaktiven funktionellen Gruppen enthalten, wie schon oben beschrieben, hergestellt. Als Polyetherpolyole werden Verbindungen der allgemeinen Formel

$$H \left[ O(CHR^8)_n \right]_m OH$$

verstanden, in der $R^8$ = H oder ein niedrigerer, gegebenenfalls mit verschiedenen Substituenten versehener Alkylrest, n = 2 bis 6 und m = 5 bis 50 ist. Beispiele sind Polyoxytetramethylenglykole. Polyesterpolyole kann man durch Polykondensation von Polycarbonsäuren oder ihren Anhydriden mit organischen Polyalkoholen oder durch Um setzung eines $\epsilon$-Lactons mit Polyalkoholen erhalten. Üblicherweise sind die Polycarbonsäuren aliphatische, cycloaliphatische oder aromatische Dicarbonsäuren und die Polyalkohole lineare oder verzweigte aliphatische oder cycloaliphatische Polyole. Beispiele sind verzweigte Polyester aud Adipinsäure, Phthalsäureanhydrid, Trimethylolpropan und Butylenglykol-1,4, oder das Reaktionsprodukt von $\epsilon$-Caprolaction mit Trimethylolpropan. Polyurethanpolyole werden durch Umsetzung von aliphatischen, cycloaliphatischen Polalkoholen, Poletherpolyolen und/oder Polyesterpolyolen erhalten. Die verschiedenen hydroxyfunktionellen Harze können auch als Gemische verwendet werden oder segmentartig aufgebaut sein. Beispiele hierfür sind die Reaktionsprodukte von 2 Mol Polyglykolether mit 1 Mol hydroxylgruppenhaltigem Polyester oder 2 Mol Polyglykolether mit 2 Mol Dicarbonsäure und 1 Mol hydroxylgruppenhaltigem Polyurethan. Die Harze enthalten eine solche Menge an polaren Gruppen, bevorzugt primären OH-Gruppen, daß sie einwandfrei in dem neutralisierten, ionischen Poly(meth)-acrylatharz (Komponente A) einemulgierbar sind. Zum Erreichen einer besseren Verträglichkeit und Wasserverdünnbarkeit ist der Einbau einer geringen Säurezahl oder Aminzahl jeweils unter 30, besonders unter 20, möglich. Die Harze werden bevorzugt so aufgebaut, daß die Komponenten beim Einbrennen nicht vergilben.

Der Molekulargewichtsbereich wird so ausgewählt, daß sie nicht mehr flüchtig sind, jedoch durch eine verbesserte Fließfähigkeit eine gute Fimbildung erzielen. Eine eventuell erfolgende Präkondensation kann in beliebiger Reihenfolge erfolgen. Zum Neutralisieren der sauren Poly(meth)-acrylatharze werden Ammoniak oder Amine, für die basischen Poly(meth)acrylatharze organische Säuren verwendent. Beispiele für Amine sind Triethylamin, Diethylamin, Triisobutylamin, Dimethylaminoethanol, Monoethanolamin, Diisopropanolamin, Triethanolamin, Morpholin, N-Methylmorpholin.

Beispiele für Säuren sind Ameisensäure, Essigsäure, Propionsäure, Milchsäure, Zitronensäure, Malonsäure, Acrylsäure, Phosphorsäure oder Alkylphosphorsäure. Monobasische niedrigmolekulare organische Carbonsäuren werden bevorzugt. Es muß mindestens so viel Neutralisationsmittel zugegeben werden, daß eine stabile Emulgierung der Harzkombination erfolgt. Ein Überschub an Neutralisationsmittel über den äquivalenten Neutralisationsgrad ist zwechmäßig zu vermeiden. Der MEQ-Wert (Milliäquivalente Neutralisationsmittel pro 100 g Festharz) liegt im allgemeinen zwischen 20 und 80. Es wird ein möglichst niedriger MEQ-Wert angestrebt, um ein möglichst hohes Abscheideäquivalent zu erhalten.

Das Überzugsmittel kann zusätzlich übliche lacktechnische Zusatzstoffe wie Antikratermittel, Verlaufmittel, Antischaummittel usw. enthalten. Naturgemäß sind solche Zusatzstoffe auszuwählen, die mit Wasser bei dem pH-Wert des ET-Bades keine störenden Reaktionen eingehen, keine störenden Fremdionen einschleppen und bei längerem Stehen nicht in nichtaufrührbarer Form ausfallen, d.h. auch nach längerem Stehen muß sich das Überzugsmittel durch Rühren in eine brauchbare Dispersion überführen lassen.

Das Überzugsmittel kann zum Senken der Viskosität, zum Steuern der Abscheidespannung und zum Verbessern der Haftung und des Verlaufs bis zu ungefähr 20 Gew.-% organische Lösemittel enthalten. Es wird ein möglichst niedriger Gehalt an organischen Lösemitteln angestrebt, besonders unter 15 Gew.-%. ganz besonders unter 10 Gew.-%. Als Lösemittel dienen Alkohole, Glykolether, Ketoalkohole, gegebenenfalls unter Zusatz von aliphatischen und/oder aromatischen Kohlenwasserstoffen verschiedener Kettenlänge. Bei der Auswahl muß berücksichtigt werden, daß das Vernetzungsmittel nicht-wasserlöslich ist und Anteile von wasserunlöslichen Lösemitteln gegebenenfalls den Dispergiervorgang erleichtern und stabilisieren können. Mit steigendem Lösemittelgehalt verschlechtert sich der Umgriff, die abgeschiedene Schichtdicke erhöht sich und es können Überbeschichtungen auftreten. Wasserunlösliche Lösemittel wirken hierbei stärker als wasserlösliche. Die eventuell für die Herstellung der Harze notwendigen aprotischen Lösemittel können gegebenenfalls nach der Herstellung des Produktes gegen andere Lösemittel durch Abdestillieren ausgetauscht werden.

Der Feststoffgehalt des Überzugsmittels gemäß der Erfindung beträgt nach Verdünnen mit Wasser zweckmäßig 5 bis 50 Gew.-%. Beim Einstellen des Lackes auf einen höheren Festkörper von 25 bis 50 Gew.-% , bevorzugt 30 bis 45 Gew.-%, werden wasserverdünnbare Einbrennlacke erhalten, die durch Tauchen, Spritzen, Walzen usw. auf das zu lackierende Objekt aufgebracht werden können. Verdünnt man dagegen auf einen Festkörper von 5 bis 30 Gew.-%, vorzugsweise 10 bis 20 Gew.-%, so ist der Lack für die elektrophoretische Abscheidung geeignet. Das Bad wird ständig gerührt, um an der Elektrodenoberfläche eine gleichmäßige Temperatur aufrechtzuerhalten und ein Absetzen der unlöslichen Bestandteile der Dispersion, z.B. der Pigement zu verhindern. Der pH-Wert des Lackes liegt im allgemeinen zwischen 4,0 und 8,5, vorzugsweise zwischen 5,0 und 8,0. Die elektrophoretische Abscheidung erfolgt zweckmäßig frühestens 24 Std. nach Herstellen des Bades. Während dieser Zeit wird zweckmäßig kontinuierlich gerührt, um eine gleichmäßige Verteilung zu erhalten.Während des Abscheidens wird das Bad bei Temperaturen von zweckmäßig etwa 15 bis 30°C gehalten. Festkörper, Abscheidetemperatur und -zeit , sowie Spannung werden so gewählt, daß die gewünschte Schichtstärke nach Abspülen mit Wasser und/oder Ultrafiltrat und Einbrennen der Temperaturen von etwa 150 bis 230°C erhalten wird. So steigt z.B. die Schichtstärke mit zunehmender Beschichtungszeit und Abscheidespannung. Beim Anlegen eines elektrischen Stromes mit einer Spannung von zweckmäßig 50 bis 500 Volt zwischen metallisch leitendem Werkstück und einer Gegenelektrode wird das Basisharz (Komponente A) auf dem zu lackierenden Gegenstand koaguliert. Es transportiert hierbei das wasserunlösliche Anreibeharz, Vernetzungsmittel, Pigmente, Katalysatoren usw. mit. Hierbei kann sich das Verhältnis von Pigment zum Kunstharz-Bindemittel im abgeschiedenen Film zugunsten des Pigmentes verschieben. Gleichzeitig werden Wasser und das zur Neutralisation verwendete Neutralisationsmittel im Bad angereichert. Zum Nachfüllen müssen daher konzentrierte Lacke verwendet werden, die diese Verschiebung durch geänderte Mengenverhältnisse ausgleichen. Diese Korrektur kann auch durch geeignete apparative Einrichtungen, z.B. Elektrodialyseverfahren oder Ultrafiltration erfolgen.

Das Mischpolymere, Komponente B) , kann allein oder unter Zusatz von Komponente A) gemäß der Erfindung in üblicher Weise mit Kugelmühle, Dreiwalze oder Perlmühle bei Temperaturen unter 80°C pigmentiert werden. Hierzu können übliche anorganische und/oder organische Pigmente, Füllstoffe, Korrosionsschutzinhibitoren und Lackhilfsmittel verwendet werden, solange sie im wäßrigen Medium keine störenden Reaktionen eingehen, keine wasserlöslichen Fremdionen einschleppen und beim Altern nicht so ausfallen, daß das Koagulat sie nicht wieder aufgerührt werden kann. Das Pigment-Bindemittelverhältnis ist abhängig von Dispergierfähigkeit und Viskosität des Bindemittels und liegt im allgemeinen zwichen 0,1:1 und 1,5:1. Bevorzugt sind solche Pigmente und damt ET-Bäder, die diese entalten, die die endgültige Farbgebung des beschichteten Gegenstandes und damit dessen Endlackierung ergeben. Die Lacke sind besonders für die Elektrotauchlackierung von Metallen geeignet und geben nach Einbrennen von bevorzugt 15 bis 45 Minuten bei 160 bis 109°C glatte, glänzende, nicht-vergilbende Filme mit guter Alterungsstabilität, Haftfestigkeit, Härte und Elastizität, sowie Korrosionsbeständigkeit.

Aufgrund des höheren Pigmentaufnahmevermögens der Komponente B) lassen sich hochglänzende Lacke mit höherem Pigment-Bindemittelverhältnis herstellen als ohne diese Maßnahme. Dadurch wird es möglich den Kantenschutz dieser Lacke zu verbessern.

<u>Herstellungsbeispiel 1</u>

Amino-poly(meth)acrylatharz A

725 g Butoxyethanol werden unter Inertgas auf 110°C unter Einschalten eines Rückflußkühlers erwärmt. Innerhalb von 3 Stunden wird eine Mischung aus 192 g Hydroxyethylacrylat, 137 g Butandiol-monoacrylat, 228 g Glycidyl-methacrylat, 364 g 2-Ethyl-hexylacrylat, 439 g Butylmethacrylat, 438 g Methylmethacrylat, 90 g Styrol und 44 g Azo-bis-isobutyronitril zugegeben. Danach wird 1 Stunde bei 110°C gehalten, 6 g Azo-bis-isobutyronitril zugegeben und dieser Vorgang nach einer weiteren Stunde wiederholt. Nach 3 Stunden 110°C wird ein Festkörpergehalt von 72.2 Gew.-% und nach Verdünnen auf 60 Gew.-% mit Butoxyethanol eine Viskosität von 2.14 Pa•s bei 25°C gemessen. Nach Abkühlen auf 50°C werden ein Gemisch von 120 g Diethylamin und 201 g Isopropanol schnell zugegeben (1.10 Mol Amin auf 1.00 Mol Epoxid). Nach 30 Minuten wird auf 65°C erwärmt,dann 1 Stunde gehalten,anschließend auf 105 bis 110°C aufgeheizt und dann 3 Stunden gehalten. Nach Abkühlen auf 80°C wird unter Vakuum Isopropanol und Aminüberschuß sorgfältig abdestilliert. Einstellen des Festkörpergehaltes mit Butoxyethanol auf etwa 78 Gew.-%.

Endwerte:

Festkörpergehalt : 78.7 Gew.-% ( 30 min 150°C)
Aminzahl : 45 mg KOH/g Festharz
Viskosität : 3,44 Pa•s (60 Gew.-% in Butoxyethanol bei 25°C)

Das Harz ist beim Lagern viskositätsstabil und gibt nach Komibation mit Vernetzungsmitteln ( vgl. Beispiel 2 und 3) glatte Oberflächen mit gleichmäßiger Schichtdickenverteilung.

Herstellungsbeispiel 2

Mischpolymeres B (Anreibeharz)

1. Teilverkapptes Polyisocyanat:

In einem 2 Liter-Dreihals-Schliffkolben, der mit Rührwerk, Thermometer und Rückflußkühler ausgerüstet ist, werden 177 g ε-Caprolactam in 240 g Diethylenglykol-dimethylether unter Erwärmen auf 60°C gelöst. Danach werden 583 g Hexandiisocyanat-Isocyanurat zugegeben und die Reaktionstemperatur auf 80°C gesteigert. Das Reaktionsgemisch wird solange bei 80°C gehalten, bis die Verkappungsreaktion abgeschlossen ist.
Endwerte:
Festkörper : 69.8 Gew.-% ( 1 Std. 150°C)
Viskosität : 660 mPa•s (bei 25°C)
NCO-Zahl : 3.3 %

2. Acryl-Poymerisat:

In einem 4 Liter-Dreihals-Schliffkolben, der mit Rührwerk, Thermometer, Rückflußkühler und zwei Tropfrichtern ausgerüstet ist, werden 336 g Diethylenglykol-dimethylether vorgelegt und unter Rühren auf 100°C aufgeheizt. Innerhalb von 5 Stunden werden ein Gemisch aus

200 g N(N,N-Dimethylaminopropyl)-methacrylamid,
98 g 2-Ethylhexyacrylat
380 g 2-Hydroxypropylmethacrylat
160 g Isobutylmethacrylat
78 g Methylmethacrylat
169g Styrol

und eine Lösung von 24 g Azo-bis-isobutyronitril in 406 g Diethylenglykol-dimethylether gleichzeitig aus zwei Tropftrichtern heraus kontinuierlich zudosiert, wobei die Temperatur von 100°C konstant gehalten wird. Nach Ende der Zulaufzeit wird eine Lösung von 4 g Azo-bis-isobutyronitril in 160 g Diethylenglykol-dimethylether hinzugegeben. Anschließend wird der Ansatz 3 Stunden lang bei 100°C auspolymerisiert. Unter Verdünnen mit 403 g Diethylenglykoldimethylether wird auf 60°C abgekühlt. Anschließend erfolgt die Urethanisierung durch Zugabe von 82 g des oben hergestellten teilverkappten Polyisocyanats. Nach 2 Stunden bei 60°C enthält das Pastenharz praktisch keine freien NCO-Gruppen mehr.
Endwerte:
Festkörper : 44.2 Gew.-% ( 1 Std. 150°C)
Viskosität : 420 mPa•s ( bei 25°C )

Herstellungsbeispiel 3

Vernetzungsmittel C) (blockiertes Polyisocyanat)

666 g Isophorondiisocyanat und 134 g Trimethylolpropan werden mit 431 g Ethylglykolacetat gemischt und unter Rühren und Luftfeuchtigkeitsausschluß innerhalb einer Stunde auf 60°C erwärmt. Das zunächst unlösliche und feste Trimethylolpropan schmilzt hierbei und reagiert langsam innerhalb einer weiteren Stunde, wobei die Temperatur auf 90°C erhöht wird. Zum Vervollständigen der Reaktion beläßt man noch weitere 3 Stunden bei 90°C und erhält ein NCO-Äquivalentgewicht von 410. Dann werden 366 g ε-Caprolactam in 3 Stunden so langsam zugegeben, daß die Reaktionstemperatur von 100°C nicht überschritten wird. Danach wird solange bei dieser Temperatur gehalten, bis die NCO-Zahl unter 0.1% abgesunken ist. Man destilliert das Lösemittel unter Vakuum weitgehend ab und verdünnt mit Butoxyethanol auf 80 Gew.-%.

Beispiel 1

In einer Perlmühle werden 210,5 g Amino-poly-(meth)acrylatharz A, 97,5 g eines Rutilpigments, 2.6 g eines handelsüblichen Extenders auf Silikatbasis, 14,0 g Ethoxypropanol und 22,5 g des Mischpolymeren B 15 Minuten lang angerieben.

Danach werden 73,1 g des Vernetzungsmittels C zugegeben und unter dem Dissolver vermischt, wobei 8,5 g Ameisensäure (50%ig) zugegeben werden.

Unter Rühren mit vollentsalztem Wasser auf 2,0 Liter verdünnen.
Festkörper : 14,4 Gew.-%(erhalten nach 25 Minuten bei 180°C) Milliäquivalent Neutralisationsmittel pro 100 g Festkörper : 33
Spezifische Badleitfähigkeit: 1.420 Mikrosiemens

Auf zinkphosphatiertem Stahlblech (Bonder 132 der Metallgesellschaft) wird bei einer Badtemperatur von 30°C 2 Minuten lang mit 190 Volt beschichtet. Nach Abspülen mit Wasser und 25 Minuten langem Einbrennen bei 180°C ergibt sich ein Trockenfilm von 30 µm.

Vergleichsbeispiel A:

Herstellung wie in Beispiel 1 aber mit folgenden Mengen: 220,9 g Amino-poly(meth)acrylatharz A, 97,4 g Rutilpigment, 2,6 g Extender, 14,0 g Ethoxypropanol, 76,7 g Vernetzer C und 8,5 g Ameisensäure.

Vergleichsbeispiel B:

Herstellung wie in Beispiel 1 aber mit folgenden Mengen: 255,7 g Amino-poly(meth)acrylatharz A, 67,4 Rutilpigment, 1,8 g Extender, 10,5 Ethoxypropanol, 88,7 g Vernetzer C und 8,5 Ameisensäure.

Ergebnisse:

| | Beispiel 1 (mit Anreibeharz) | Vergleichsbeispiel A (ohne Anreibeharz) | Vergleichsbeispiel B (ohne Anreibeharz) |
|---|---|---|---|
| Pigment-/Bindemittelverhältnis | 0,5/1 | 0,5/1 | 0,3/1 |
| Kantenschutz | gut | gut | mäßig |
| erforderliche Dispergierzeit | 15 min | 30 min | 30 min |
| Glanz gemessen bei einem Winkel von $60^{o}$ | 75% | 59% | 75% |

Herstellungsbeispiel 4

Carboxylgruppenhaltiges Poly(meth)acrylatharz

In einem 2-Liter-Dreihals-Schliffkolben, der mit Thermometer, Rückflußkühler und Monomerzulaufdosierung versehen ist, werden 350 g Butoxyethanol gegeben und auf 135°C erhitzt. Innerhalb von 90 Minuten läßt man eine Mischung von

200 g Methylmethacrylat,
255 g Butylacrylat,
100 g Styrol,
112,5 g 2-Hydroxyethylacrylat,
82,5 g Acrylsäure,
22,5 g Di-tert.-Butylperoxid und
15,0 g tert.-Dodecylmercaptan

zulaufen, wobei eine Temperatur von 135°C aufrechterhalten wird. Anschließend läßt man 3 Stunden auspolymerisieren und erhält einen Festkörpergehalt von 60 Gew.-%. Etwa 100 g Lösemittel werden dann unter Vakuum abdestilliert auf einen Festkörpergehalt von 75 Gew.-%.

Kenndaten: Festkörpergehalt: 75 Gew.-%(30 min,180°C)
Viskosität : 650 mPa•s bei 25°C (nach Verdünnen auf 50 Gew.-% mit Butoxyethanol)
Säurezahl : 80,4(mg KOH pro g Feststoff.)

Beispiel 2

In einer Perlmühle werden 112 g eines Acrylatharzes nach Herstellungsbeispiel 4, 53,0 g eines handelsüblichen Rutilpigments auf Silikatbasis, 4,5 g eines handelsüblichen Verlaufsmittels, 21,75 g Epoxidharz Ester, hergestellt durch Veresterung von 1 Äquivalent eines flüssigen Epoxidharzes vom Bisphenol A-Typ mit einem Äquivalentgewicht von 188 und 1 Mol Isononansäure, 13,5 g eines handelsüblichen Extenders, 2 g Butoxyethanol und 3 g des Mischpolymeren B 15 Minuten lang angerieben.

Danach werden 30,5 g eines handelsüblichen Melaminharzes, HMMM-Typ mischverethert (Festkörper 93 Gew-%), zugegeben und unter dem Dissolver vermischt, wobei 37 g Diisopropanolamin (1:1 mit Wasser verdünnt) zugegeben werden. Unter Rühren wird mit vollentsalztem Wasser auf 2 Liter verdünnt.

Festkörper : 10,2 Gew.-% (erhalten nach 25 Minuten bei 180°C)
Milliäquivalent Neutralisationsmittel pro 100 g Festkörper : 86
Spezifische Badleitfähigkeit: 840 Mikrosiemens.

Vergleichsbeispiel C

Herstellung wie Beispiel 2 unter Weglassen des Mischpolymeren B und Erhöhung der Dispergierzeit um 10 Minuten.

Vergleichsbeispiel D

Herstellung wie Vergleichsbeispiel C, aber mit folgenden Mengen:

128,5 g Acrylatharz
4,5 g Verlaufsemittel
2,0 g Butylglykol
25,0 g Epoxidharz Ester
36,8 g Rutilpigment
9,4 g Extender
35,1 g Melaminharz
37,0 g Diisopropanolamin

Ergebnisse:

| | Beispiel 2 (mit Anreibeharz) | Vergleichsbeispiel C (ohne Anreibeharz) | Vergleichsbeispiel D (ohne Anreibeharz) |
|---|---|---|---|
| Pigment/Bindemittel-verhältnis | 0,5/1 | 0,5/1 | 0,3/1 |
| Kantenschutz | gut | gut | mäßig |
| erforderliche Dispergierzeit | 15 min | 25 min | 25 min |
| Glanz gemessen bei einem Winkel von $60^o$ | 71% | 59% | 70% |

## Ansprüche

1. Fremdvernetzende Bindemittelkombination für wasserverdünnbare Lacke,enthaltend

A) 94 bis 40 Gew.-% wasserverdünnbares Hydroxylgruppen enthaltendes Poly(meth)-acrylatharz mit ionischen Gruppen,

B) 1 bis 10 Gew.-% Mischpolymeres, das erhältlich ist durch Umsetzung von

a1) 80 bis 95 Gew.-% N[N,N-Di-$C_{1-4}$-alkylamino-$C_{1-8}$-alkyl(meth)] acrylamiden und/oder einem Gemisch von N,N-Di-$C_{1-4}$-alkylamino-$C_{1-8}$-alkyl(meth)acrylaten und N-substituierten (Meth)-acrylamiden und/oder (Meth)acrylamid, wobei das Verhältnis der Amino(meth)acrylate zu den Amido-(meth)acrylaten 1:2 bis 2:1 ist,

a2)10 bis 40 Gew.-% Hydroxy-$C_{2-8}$-alkyl(meth)-acrylaten,

a3) 20 bis 89,5 Gew.-% copolymerisierbaren $\alpha,\beta$-olefinisch ungesättigten Verbindungen und

b) 5 bis 20 Gew.-% eines unverkappte und gegebenenfalls auch verkappte Isocyanatgruppen aufweisenden Polyisocyanat, das Biuret-, Urethan- oder Isocyanurat-Gruppen aufweist, und

C) 5 bis 50 Gew.-% Vernetzungsmittel.

2. Fremdvernetzende Bindemittelkombination nach Anspruch 1, dadurch gekennzeichnet, daß die Komponente A) ein basisches Polymerisationsharz ist, mit einer Aminzahl von 30 bis 150, einer Hydroxylzahl von 30 bis 450, einer zahlenmittleren Molmasse ($\overline{M}n$) von 500 bis 50 000, einer Viskosität von 0,1 bis 10 Pa•s in 50%iger Lösung in Monoglykolethern bei 25°C, und einer Glasübergangstemperatur von -50 bis +150°C.

3. Fremdvernetzende Bindemittelkombination nach Anspruch 1 oder 2, dadurch gekennzeichnet, daß die Komponente A) erhältlich ist aus radikalisch polymerisierbaren

a) aminogruppenhaltigen Monomeren und

b) hydroxylgruppenhaltigen Monomeren oder

ab) aminogruppen-und hydroxylgruppenhaltigen Monomeren und jeweils

c) Monomeren, die keine weiteren reaktiven Gruppen enthalten, wobei 6 bis 40 Gewichtsteile der Komponente a) und 4 bis 50 Gewichtsteile der Komponente b) oder 8 bis 60 Gewichtsteile der Komponente ab) pro 10 bis 90 Gewichtsteile der Komponente c) eingesetzt werden.

4. Fremdvernetzende Bindemittelkombination nach Anspruch 3, dadurch gekennzeichnet, daß von den 10 bis 90 Gewichtsteilen der Komponente A)c) 0,1 bis 7 Gewichtsteile ersetzt sind durch ein ethylenisch polyungesättigtes Monomeres.

5. Fremdvernetzende Bindemittelkombination nach Anspruch 1, dadurch gekennzeichnet, daß die Komponente A) ein saures Poly(meth)acrylatharz mit einer Säurezahl von 25 bis 150, einer Hydroxylzahl von 30 bis 450, einer zahlenmittleren Molmasse ($\overline{M}$ n) von 500 bis 50 000, eine Viskosität von 0,1 bis 10 Pa•s in 50%iger Lösung in Monoglykolethern bei 25°C mit einer Glasübergangstemperatur von -50 bis +150°C ist.

6. Fremdvernetzende Bindemittelkombination nach Anspruch 5, dadurch gekennzeichnet, daß die Komponente A) erhältlich ist aus radikalisch polymerisierbaren

a) säuregruppenhaltigen Monomeren und

b) hydroxylgruppenhaltigen Monomeren und

c) Monomeren, die keine weiteren reaktiven Gruppen enthalten,

wobei

2 bis 40 Gew.-Teile der Komponente a) und

4 bis 50 Gew.-Teile der Komponenten b) pro

10 bis 90 Gew.-Teile der Komponente c)

eingesetzt werden.

7. Fremdvernetzende Bindemittelkombination nach einem der vorhergehenden Ansprüche , dadurch gekennzeichnet, daß die Komponente C) aus umesterungsfähigen Vernetzungsmitteln und/oder blockierten Polyisocyanaten und/oder Formaldehyd-Kondensationsharzen besteht.

8. Fremdvernetzende Bindemittelkombination nach einem der vorhergehenden Ansprüche, dadurch gekennzeichnet, daß die Komponente A) ein fremdvernetzendes Epoxidgruppenfreies Aminopoly(meth)acrylatharz mit einer Aminzahl von 30 bis 150 und einer Hydroxylzahl von 30 bis 450 ist, erhältlich durch Umsetzung eines Epoxidgruppen enthaltenden Poly(meth)acrylatharzes mit einer mittleren Molmasse ($\overline{M}$ n) von 600 bis 10 000 und einem Epoxyäquivalentgewicht von 300 bis 4000, mit einem Überschuß an Ammoniak, primären und/oder sekundären Monoaminen und/oder Aminoalkoholen, so daß freien Epoxidgruppen umgesetzt werden, wobei die nicht umgesetzten überschüssigen Aminverbindungen abdestilliert werden.

9. Wäßriges Überzugsmittel enthaltend die Bindemittelkombination gemäß einem der Ansprüche 1 bis 8 gegebenenfalls mit üblichen Pigmenten, Füllstoffen, Korrosionsschutzinhibitoren, Lackhilfsmitteln, Katalysatoren und/oder organischen Lösemitteln.

10. Verwendung der wäßrigen Überzugsmittel nach Anspruch 9 zum Beschichten von elektrisch leitenden Gegenständen an der Kathode oder an der Anode.